**Europäisches Patentamt**

**European Patent Office**

**Office européen des brevets**

(11) Veröffentlichungsnummer: **0 372 160**
**A1**

(12) **EUROPÄISCHE PATENTANMELDUNG**

(21) Anmeldenummer: 89112932.2

(22) Anmeldetag: 14.07.89

(51) Int. Cl.⁵: **B60K 37/06, B60H 1/00,**
**B60Q 3/04**

(30) Priorität: 03.12.88 DE 8815072 U

(43) Veröffentlichungstag der Anmeldung:
**13.06.90 Patentblatt 90/24**

(84) Benannte Vertragsstaaten:
**DE ES FR GB IT SE**

(71) Anmelder: **Hörauf & Kohler KG**
**Peter-Dörfler-Strasse 27**
**D-8900 Augsburg(DE)**

(72) Erfinder: **Schiele, Günter, Dipl.-Ing.**
**Dr.-Zamenhof-Strasse 5**
**D-8900 Augsburg(DE)**

(74) Vertreter: **Liebau, Gerhard, Dipl.-Ing.**
**Birkenstrasse 39 Postfach 22 02 29**
**D-8900 Augsburg 22(DE)**

(54) **Beleuchtete Reguliervorrichtung zur Betätigung einer Belüftungseinrichtung oder dgl. in einem Kraftfahrzeug.**

(57) Bei einer beleuchteten Reguliervorrichtung zur Betätigung einer Belüftungseinrichtung oder dgl. in einem Kraftfahrzeug sind in der Umgebung eines um seine Achse drehbaren Regulierrades (2, 3) mehrere stationär angeordnete Lichtaustritte (13b, 14b) und am Umfang des Regulierrades ein beweglicher Lichtaustritt (11a, 12a) vorgesehen. Die Lichtaustritte (11a, 12a, 13b, 14b) sind durch Einsätze aus glasklarem, starrem Kunststoff gebildet und sind mit einer gemeinsamen Lichtquelle (16, 17) über Lichtleiteinsätze (11, 12, 13, 14) verbunden. Alle stationären Lichtaustritte (13b, 14b) sind an den Enden von Armen (13a, 14a) eines von der Lichtquelle (16, 17) bis zu den Lichtaustritten (13b, 14b) reichenden, einstückigen Lichtleiteinsatzes (13, 14) mit innerer Totalreflexion aus glasklarem, starrem Kunststoff ausgebildet. Dieser Lichtleiteinsatz (13, 14) ist im Bereich der Drehachse (A) des Regulierrades (2, 3) mit einer seitlichen Lichtaustrittsfläche (13d, 14d) versehen. Im Regulierrad (2, 3) ist ein von dem beweglichen Lichtaustritt (11a, 12a) bis in den Bereich der Drehachse (A) reichender, einstückiger Lichtleiteinsatz (11, 12) mit innerer Totalreflexion aus glasklarem, starrem Kunststoff vorgesehen, an dessen radial äußerem Ende der Lichtaustritt (11a, 12a) ausgebildet ist und an dessen radial innerem Ende eine sich in einer Radialebene erstreckende und der Lichtaustrittsfläche (13d, 14d) gegenüberstehende Lichteintrittsfläche (11b, 12b) vorgesehen ist.

FIG. 2

## Beleuchtete Reguliervorrichtung zur Betätigung einer Belüftungseinrichtung oder dgl. in einem Kraftfahrzeug.

Die Erfindung betrifft eine beleuchtete Reguliervorrichtung zur Betätigung einer Belüftungseinrichtung oder dgl. in einem Kraftfahrzeug, mit mindestens einem um seine Achse drehbaren Regulierrad mit mehreren in der Umgebung des Regulierrades stationär angeordneten Lichtaustritten, mit einem am Umfang des Regulierrades vorgesehenen, beweglichen Lichtaustritt und mit einer gemeinsamen Lichtquelle, wobei die Lichtaustritte durch Einsätze aus glasklarem, starrem Kunststoff gebildet und mit der gemeinsamen Lichtquelle über aus glasklarem Kunststoff bestehende Lichtleitelemente mit innerer Totalreflexion verbunden sind.

Um dem Kraftfahrer bei Nacht die Bedienung der Regulierräder von Belüftungseinrichtungen oder dgl. zu erleichtern und damit die Fahrsicherheit zu erhöhen, ist es bekannt, am Regulierrad selbst und in dessen Umgebung Lichtaustritte vorzusehen, die noch durch besondere Symbole oder auch farbig gekennzeichnet sein können. Um hierbei mit möglichst wenig Lichtquellen, d.h. Glühlampen, auszukommen, wird das Licht von einer einzigen Lichtquelle zu mehreren Lichtaustritten mittels flexiblen Lichtleitkabeln geleitet. Diese flexiblen Lichtleitkabel bestehen aus einem Kunststoffdraht aus glasklarem Kunststoff mit etwa 1 mm Durchmeser und einer Ummantelung aus lichtundurchlässigem Material. Da bei der bekannten Reguliervorrichtung im Bereich jedes Regulierrades drei Lichtaustritte vorgesehen sind, müssen drei Lichtleitkabel vorhanden sein, deren Enden im Bereich der Lichtquelle durch ein Verbindungsstück verbunden und gehalten sein müssen. Damit die anderen Enden der Lichtleitkabel nicht aus den Einsätzen herausrutschen, sind sie mit Metallhülsen umgeben, die in entsprechende Bohrungen der Einsätze passen.

Die Herstellung und Montage derartiger, aus drei Lichtleitkabeln zusammengesetzter Garnituren, ist nur durch wenige Spezialfirmen möglich. Wegen des großen Herstellungsaufwandes sind diese Garnituren teuer. Zusätzlich müssen außerdem auch noch die drei Einsätze hergestellt und montiert werden. Wird die Montage der Lichtleitkabel nicht sorgfältig vorgenommen, dann können ihre Enden aus den Bohrungen der Einsätze herausrutschen, so daß der betreffende Einsatz dann nicht mehr beleuchtet ist.

Der Erfindung liegt die Aufgabe zugrunde, eine beleuchtete Reguliervorrichtung zur Betätigung einer Belüftungseinrichtung oder dgl. in einem Kraftfahrzeug der eingangs erwähnten Art zu schaffen, die bezüglich der eigentlichen Beleuchtungseinrich

tung aus wenigen, einfach herzustellenden und leicht zu montierenden Teilen besteht und damit billiger in der Herstellung sowie außerordentlich betriebssicher ist.

Dies wird nach der Erfindung dadurch erreicht, daß alle stationären Lichtaustritte an den Enden von Armen eines von der Lichtquelle bis zu den Lichtaustritten reichenden, einstückigen Lichtleiteinsatzes mit innerer Totalreflexion aus glasklarem, starrem Kunststoff ausgebildet sind, daß dieser Lichtleiteinsatz im Bereich der Drehachse des Regulierrades mit einer seitlichen Lichtaustrittsfläche versehen ist, daß im Regulierrad ein von dem beweglichen Lichtaustritt bis in den Bereich der Drehachse reichender, einstückiger Lichteinsatz mit innerer Totalreflexion aus glasklarem, starrem Kunststoff vorgesehen ist, an dessen radial äußerem Ende der Lichtaustritt ausgebildet ist und an dessen radial innerem Ende eine sich in einer Radialebene erstreckende und der Lichtaustrittsfläche gegenüberstehende Lichteintrittsfläche vorgesehen ist.

Bei der neuen beleuchteten Reguliervorrichtung besteht die Beleuchtungseinrichtung praktisch nur aus drei Teilen, nämlich der eigentlichen Lichtquelle sowie den beiden Lichtleiteinsätzen. Diese Lichtleiteinsätze dienen gleichzeitig zur Ausbildung der drei Lichtaustritte und auch zur optischen Verbindung zwischen den Lichtaustritten und der Lichtquelle. Die Lichtleiteinsätze können in entsprechenden Spritzformen sehr einfach und bei entsprechenden Stückzahlen auch relativ billig hergestellt werden. Der Einsatz im Regulierrad wird in eine entsprechende Ausnehmung desselben eingesetzt und dort, wie bei Kunststoffteilen üblich, durch entsprechende Hinterschneidungen oder Klemmwirkung gehalten. In gleicher Weise wird auch der Lichtleiteinsatz in entsprechende Ausnehmungen des stationären Gehäuses eingesetzt. Irgendwelche Metallteile und deren Montage entfallen. Das Einsetzen der Lichtleiteinsätze kann rasch und zuverlässig durchgeführt werden und es besteht auch keine Gefahr einer fehlerhaften Montage.

Vorteilhafte Ausgestaltungen der Erfindung sind in den Unteransprüchen gekennzeichnet.

Die Erfindung ist in folgendem, anhand eines Ausführungsbeispieles mit zwei unterschiedlich ausgestalteten Regulierrädern näher erläutert. Es zeigen:

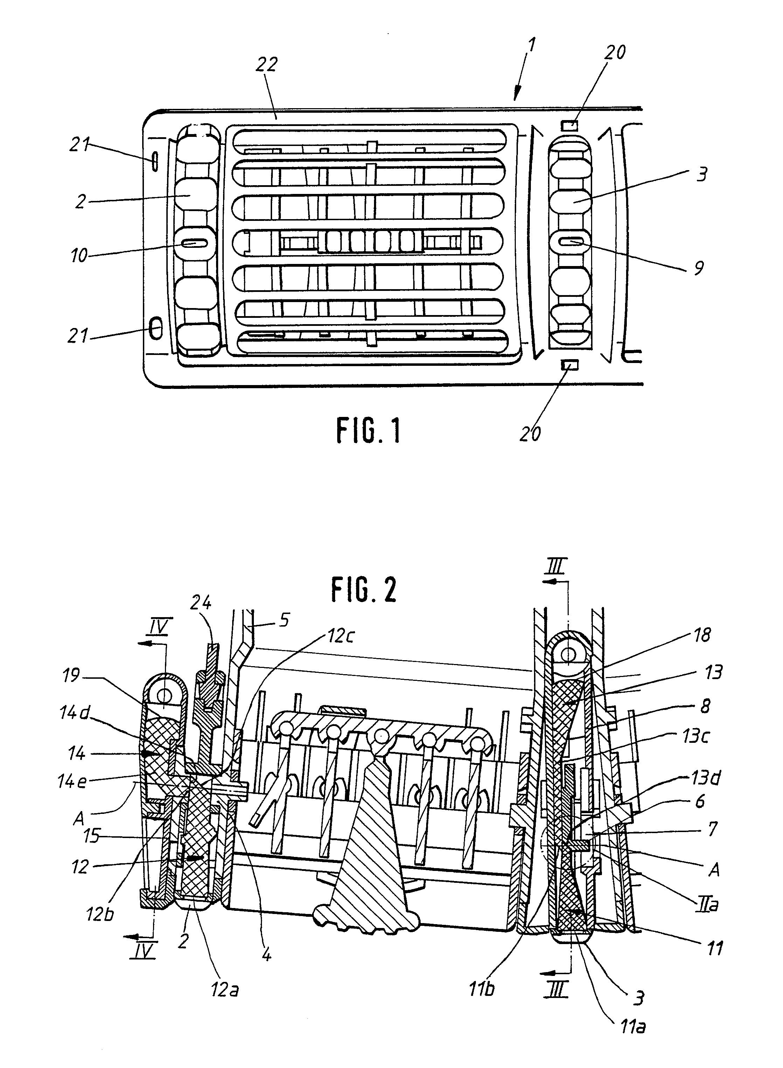

Figur 1 die Außenansicht einer Belüfungseinrichtung für ein Kraftfahrzeug mit der erfindungsgemäßen beleuchteten Reguliervorrichtung,

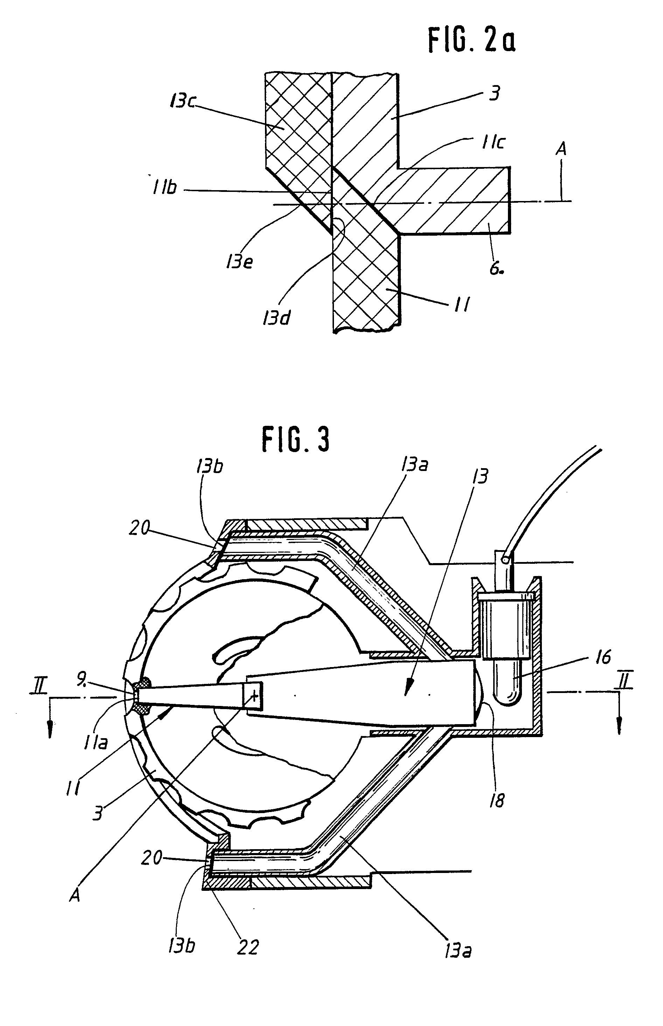

Figur 2 einen Horizontalschnitt nach der Linie II-II der Figur 3,

Figur 2a Einzelheiten an der Stelle IIa der Figur 2,

Figur 3 einen Vertikalschnitt nach der Linie III-III der Figur 2,

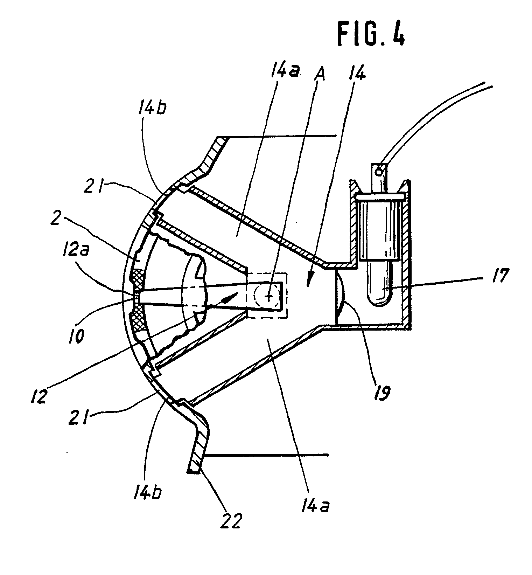

Figur 4 einen Vertikalschnitt in etwa nach der Linie IV-IV der Figur 2.

Die in der Zeichnung dargestellte Belüftungseinrichtung 1 für ein Kraftfahrzeug weist insgesamt drei Reguliervorrichtungen auf, die je mit einem um seine Achse A drehbaren Regulierrad 2, 3 ausgerüstet sind. Die dritte Reguliervorrichtung ist in der Zeichnung nicht dargestellt, sie entspricht spiegelbildlich der in der Zeichnung, links, dargestellten Reguliervorrichtung. Mittels dem Regulierrad 2 kann über ein Hebegestänge 24 eine nicht dargestellte Luftklappe betätigt werden, mit der die Luftzufuhr reguliert wird. Das Regulierrad 2 ist auf einem Achszapfen 4 des Gehäuseteiles 5 drehbar gelagert. Hingegen weist das Regulierrad 3 einen Achszapfen 6 auf, der in ein Potentiometer 7 eingreift. Das Potentiometer 7 ist in dem Gehäuseteil 8 fest verankert. Mit Hilfe dieses Potentiometers kann die Lufttemperatur reguliert werden.

Um nun die jeweilige Drehstellung der Regulierräder 2, 3 auch bei Dunkelheit anzuzeigen, ist jedem der Regulierräder eine spezielle Beleuchtungseinrichtung zugeordnet. Jedes der Regulierräder 2, 3 weist an seinem Umfang eine schlitzartige Durchbrechung 9, 10 auf. In jedem Regulierrad 2, 3 ist ferner ein einstückiger Lichteinsatz 11, 12 vorgesehen. Dieser einstückige Lichteinsatz 11, 12 reicht von der Durchbrechung 9, 10 bis in den Bereich der Drehachse A. Am radial äußeren Ende jedes Lichtleiteinsatzes 11, 12 ist ein Lichtaustritt 11a, 12a ausgebildet. Im Bereich der Drehachse A weist jeder Lichtleiteinsatz 11, 12 eine Lichteintrittsfläche 11b, 12b auf. Ferner ist im Bereich der Drehachse ,auch eine unter 45° gegenüber derselben geneigte Reflexionsfläche 11c, 12c vorgesehen.

In dem Gehäuseteil 8 des Regulierrades 11 ist ein Lichtleiteinsatz 13 und in dem Gehäuseteil 15 ein Lichtleiteinsatz 14 angeordnet. Jeder der beiden Lichtleiteinsätze 13, 14 weist zwei Arme 13a, 14a auf, an deren freien Enden Lichtaustritte 13b, 14b ausgebildet sind. Die beiden Lichtleiteinsätze 13, 14 reichen je bis zu einer Lichtquelle 16, 17. Die der Lichtquelle 16, 17 gegenüberliegende Lichteintrittsfläche 18, 19 der Lichtleiteinsätze 13, 14 ist zweckmäßig als Sammellinse ausgebildet. Der Lichtleiteinsatz 13 weist einen dritten Arm 13c auf, der sich bis in den Bereich der Drehachse A erstreckt. Dort ist der Arm 13c mit einer Lichtaustrittsfläche 13d versehen, die der Lichteintrittsfläche 11c gegenübersteht. Beide erstrecken sich in einer radial zu der Drehachse A verlaufenden Ebene. Außerdem ist an dem Arm 13c im Bereich der Drehachse A eine unter 45° gegenüber derselben geneigte Reflexionsfläche 13e vorgesehen.

Der Lichtleiteinsatz 14 ist im Bereich der Drehachse A ebenfalls mit einer Lichtaustrittsfläche 14d versehen, die der am Lichtleiteinsatz 12 vorgesehenen Lichteintrittsfläche 12b gegenübersteht. Außerdem weist der Lichtleiteinsatz 14 im Bereich der Drehachse A eine unter 45° gegenüber derselben geneigte Reflexionsfläche 14e auf.

Die Lichtleiteinsätze 11 - 14 bestehen aus glasklarem, starrem Kunststoff und weisen eine innere Totalreflexion auf. Um diese innere Totalreflexion zu erreichen, haben die Lichtleiteinsätze 11 - 14 eine polierte Oberfläche, die durch Polieren der entsprechenden Spritzformen erzielbar ist. Die Lichtleiteinsätze 11 - 14 bestehen zweckmäßig aus Acrylglas oder Polycarbonat.

Die Lichtaustritte 13b, 14b der Lichtleiteinsätze 13 sind hinter entsprechenden Durchbrechungen angeordnet, die in einer Kunststoffblende 22 vorgesehen sind.

Um einen eventuell störenden Lichtaustritt an Stellen zu vermeiden, wo kein Licht austreten soll, ist es zweckmäßig, wenn die Lichtleiteinsätze 11 - 14 mit Ausnahme der Lichtaustritte 11a, 12a, 13b, 14b sowie der Lichteintritts- und -austrittsfläche 11b, 12b, 13d, 14d, 18, 19 von Wandungen aus lichtundurchlässigem Material umgeben sind. Diese Wandungen können Teile von Gehäuseteilen sein, oder auch Teile der Regulierräder 2, 3'. Aus Gründen der Übersichtlichkeit sind diese Wandungen in der Zeichnung zum Teil weggelassen.

Die Wirkungsweise ist folgende:

Das von der Lichtquelle 17 ausgestrahlte Licht tritt über die Lichteintrittsfläche 19 in den Lichtleiteinsatz 14 ein. Da an dessen Wänden eine Totalreflexion stattfindet, wird das Licht annähernd verlustfrei im Lichtleiteinsatz 14 weitergeleitet. Es tritt an den Lichtaustritten 14b aus und durch die Durchbrechungen 21 hindurch. Die Durchbrechungen 21 können entsprechend geformt sein oder farbige Einsätze aufweisen, so daß sie Symbole für die Bedienung der Belüftungsvorrichtung bilden. Das in den Lichtleiteinsatz 14 eingeleitete Licht gelangt auch an die Reflexionsfläche 14e, die nach Art eines Spiegels wirkt und die Lichtstrahlen in Richtung der Achse A umlenkt. Das Licht tritt an der Lichtaustrittsfläche 14d aus ,dem Lichtleiteinsatz 14 aus und über die Lichteintrittsfläche 12b in den Lichtleiteinsatz 12 ein. Hier wird es an der Reflexionsfläche 12c erneut umgelenkt, so daß es nunmehr radial nach außen gerichtet ist und zu dem Lichtaustritt 12a gelangt. Dort wird die Durchbrechung 10 beleuchtet. Entsprechendes gilt auch für die Lichtleiteinsätze 11 und 13.

**Ansprüche**

1. Beleuchtete Reguliervorrichtung zur Betätigung einer Belüftungseinrichtung oder dgl. in einem Kraftfahrzeug, mit mindestens einem um seine Achse drehbaren Regulierrad, mit mehreren in der Umgebung des Regulierrades stationär angeordneten Lichtaustritten, mit einem am Umfang des Regulierrades vorgesehenen, beweglichen Lichtaustritt und mit einer gemeinsamen Lichtquelle, wobei die Lichtaustritte durch Einsätze aus glasklarem, starrem Kunststoff gebildet und mit der gemeinsamen Lichtquelle über aus glasklarem Kunststoff bestehende Lichtleitelemente mit innerer Totalreflexion verbunden sind, **dadurch gekennzeichnet, daß** alle stationären Lichtaustritte (13b, 14b) an den Enden von Armen (13a, 14a) eines von der Lichtquelle (16, 17) bis zu den Lichtaustritten (13b, 14b) reichenden, einstückigen Lichtleiteinsatzes (13, 14) mit innerer Totalreflexion aus glasklarem, starrem Kunststoff ausgebildet sind, daß dieser Lichtleiteinsatz (13, 14) im Bereich der Drehachse (A) des Regulierrades (2, 3) mit einer seitlichen Lichtaustrittsfläche (13d 14d) versehen ist, daß im Regulierrad (2, 3) ein von dem beweglichen Lichtaustritt (11a, 12a) bis in den Bereich der Drehachse (A) reichender, einstückiger Lichtleiteinsatz (11, 12) mit innerer Totalreflexion aus glasklarem, starrem Kunststoff vorgesehen ist, an dessen radial äußerem Ende der Lichtaustritt (11a, 12a) ausgebildet ist und an dessen radial innerem Ende eine sich in einer Radialebene erstreckende und der Lichtaustrittsfläche (13d, 14d) gegenüberstehende Lichteintrittsfläche (11b, 12b) vorgesehen ist.

2. Vorrichtung nach Anspruch 1, **dadurch gekennzeichnet, daß** beide Lichtleiteinsätze (11 - 14) sich im wesentlichen in radial zur Drehachse (A) verlaufenden Ebenen erstrecken und im Bereich der Drehachse (A) unter 45° gegenüber derselben geneigte Reflexionsflächen (11c, 12c, 13e, 14e) nach Art von Prismen aufweisen.

3. Vorrichtung nach Anspruch 1 oder 2, **dadurch gekennzeichnet, daß** die der Lichtquelle (16, 17) gegenüberliegende Lichteintrittsfläche (18, 19) des Lichtleiteinsatzes (13, 14) als Sammellinse ausgebildet ist.

4. Vorrichtung nach Anspruch 1, 2 oder 3, **dadurch gekennzeichnet, daß** die Lichtleiteinsätze (11 - 14) aus Acrylglas oder Polycarbonat bestehen.

5. Vorrichtung nach mindestens einem der Ansprüche 1 - 4, **dadurch gekennzeichnet, daß** die Lichtleiteinsätze (11 - 14) mit Ausnahme der Lichtaustritte (11a, 12a, 13b, 14b) sowie Lichteintritts- und -austrittsflächen (11b, 12b, 13d, 14d) von Wandungen aus lichtundurchlässigem Material umgeben sind.

FIG.1

FIG.2

# FIG. 2a

# FIG. 3

FIG. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | GB-A-2169739 (HELAG-ELECTRONIC GMBH) <br> * das ganze Dokument * | 1, 2 | B60K37/06 <br> B60H1/00 <br> B60Q3/04 |
| A | | 5 | |
| A | DE-B-1675063 (KAMMERER GMBH) <br> * Spalte 1, Zeilen 1 - 8 * <br> * Spalte 1, Zeile 66 - Spalte 2, Zeile 28; Figuren * | 1, 2, 3 | |
| A | DE-A-3228932 (HELAG-ELECTRONIC GMBH) <br> * Seite 4, Zeile 7 - Seite 5, Zeile 17 * <br> * Seite 8, Zeilen 5 - 23; Figuren * | 1, 2 | |
| A | EP-A-289812 (PREH GMBH) <br> * das ganze Dokument * | 1, 2 | |
| A | US-A-3673544 (DUPREE) <br> * Spalte 2, Zeilen 7 - 19 * | 4 | |

RECHERCHIERTE SACHGEBIETE (Int. Cl.5 )

B60H
B60K
G05G
H01H
B60Q

Der vorliegende Recherchenbericht wurde für alle Patentansprüche erstellt

| Recherchenort | Abschlußdatum der Recherche | Prüfer |
|---|---|---|
| DEN HAAG | 21 FEBRUAR 1990 | BOLJANAC T. |